# EUROPEAN PATENT SPECIFICATION

(11) **EP 3 649 025 B1**
(45) Date of publication and mention of the grant of the patent: **21.05.2025**
(21) Application number: 18849103.9
(22) Date of filing: 21.08.2018
(51) Int. Cl.: B60W 30/18, G08G 1/00, G05D 1/00, G01C 21/32, G01C 21/34, B60W 50/00, B60W 30/14, B60W 40/10, G01C 21/00

(54) **ESTIMATING TIME TO PICK UP AND DROP OFF PASSENGERS FOR IMPROVED STOPPING ANALYSIS IN AUTONOMOUS VEHICLES**
SCHÄTZUNG DER ZEIT ZUM ABHOLEN UND ABSETZEN VON PASSAGIEREN FÜR VERBESSERTE HALTEANALYSE BEI AUTONOMEN FAHRZEUGEN
ESTIMATION DE TEMPS POUR ALLER CHERCHER ET DÉPOSER DES PASSAGERS EN VUE D'UNE MEILLEURE ANALYSE DE L'ARRÊT DANS DES VÉHICULES AUTONOMES

(30) Priority: 22.08.2017 US 201715682754
(43) Date of publication of application: 13.05.2020
(73) Proprietor: Waymo LLC, Mountain View, CA 94043 (US)
(72) Inventor: DYER, John, Wesley, Mountain View, CA 94043 (US); TORRES, Luis, Mountain View, CA 94043 (US); CHEN, Yu-Hsin, Mountain View, CA 94043 (US); EPSTEIN, Michael, Mountain View, CA 94043 (US)
(74) Representative: Derry, Paul Stefan
(86) International application number: PCT/US2018/047206
(87) International publication number: WO 2019/040420

(56) References cited:
- WO-A1-2016/209595
- US-A1- 2015 219 464
- US-A1- 2015 346 727
- US-A1- 2017 193 627
- US-A1- 2017 219 362

## Description

### BACKGROUND

Autonomous vehicles, such as vehicles that do not require a human driver, can be used to aid in the transport of passengers or items from one location to another. Such vehicles may operate in a fully autonomous mode where passengers may provide some initial input, such as a pickup or destination location, and the vehicle maneuvers itself to that location.

When a person (or user) wants to be physically transported between two locations via a vehicle, they may use any number of transportation services. To date, these services typically involve a human driver who is given dispatch instructions to a location to pick up the user. In many cases, the human driver and the user are able to arrange an exact location for the user to be picked up. In addition, drivers and users are able to "flag down" one another, use eye contact, speak to one another, or other signals to indicate recognition of one another and thereby agree to some location prior to the vehicle reaching the exact location for the pickup. This is not readily achievable in the case of autonomous vehicles which do not have a human driver.

US 2015/219464 discloses an approach for determining a recommended passenger embarkation point to associate with a point of interest. WO 2016/209595 discloses systems and methods for providing suggested locations for pick up and destination locations.

### BRIEF SUMMARY

The invention is set out as in the independent claims. Optional features are set out as in the dependent claims.

In one example, the estimate is determined based on whether the passenger will be exiting or entering the vehicle at the location. In another example, the estimate is determined using a minimum amount of time and adding to that minimum amount of time additional time according to a plurality of factors. In this example, the plurality of factors includes whether the passenger has any packages. In addition or alternatively, the plurality of factors includes whether any packages need to be retrieved from a cargo compartment of the vehicle. In addition or alternatively, the plurality of factors includes whether any packages need to be placed in a cargo compartment of the vehicle. In addition or alternatively, the plurality of factors includes historical information identifying prior amounts of time for the passenger entering or exiting one or more vehicles. In addition or alternatively, the plurality of factors includes a number of other passengers who will be entering or exiting the vehicle with the passenger. In addition or alternatively, the plurality of factors includes a whether a child safety seat will be installed. In addition or alternatively, the plurality of factors includes historical traffic information. In another example, the method also includes filtering the set of possible places based on the comparisons and determining for each place of the filtered set of possible places a cost value, and identifying the particular one is based on the cost values.

In one example, the estimate is determined based on whether the passenger will be exiting or entering the vehicle at the location. In another example, the estimate is determined using a minimum amount of time and adding to that minimum amount of time additional time according to a plurality of factors. In this example, the plurality of factors includes a number of other passengers who will be entering or exiting the vehicle with the passenger. In addition or alternatively, the plurality of factors includes a whether a child safety seat will be installed. In addition or alternatively, the plurality of factors includes historical traffic information. In another example, the one or more processors are further configured to filter the set of possible places based on the comparisons and determine for each place of the filtered set of possible places a cost value, and identifying the particular one is based on the cost values. In another example, the system also includes the vehicle.

### BRIEF DESCRIPTION OF THE DRAWINGS

FIGURE 1 is a functional diagram of an example vehicle in accordance with aspects of the disclosure.
FIGURES 2A and 2B are an example representation of detailed map information in accordance with aspects of the disclosure.
FIGURES 3A-3D are example external views of a vehicle in accordance with aspects of the disclosure.
FIGURE 4 is an example pictorial diagram of a system in accordance with aspects of the disclosure.
FIGURE 5 is an example functional diagram of a system in accordance with aspects of the disclosure.
FIGURE 6 is a view of a section of roadway in accordance with aspects of the disclosure.
FIGURE 7 is flow diagram in accordance with aspects of the disclosure.

### DETAILED DESCRIPTION

### OVERVIEW

Passenger pick up and drop off for self-driving vehicles can be challenging due to the difficulties involved in communicating information between people and the computing devices that control these vehicles. Even where such computing devices and a pedestrian "recognize" one another, the computing devices must still find an appropriate place to stop and wait for the pedestrian to enter or exit the vehicle. Typically where a vehicle stops is guided by distance from the pickup or drop off location as well as safety considerations such as whether the pickup is in a busy or quiet street and how disruptive to the flow of traffic stopping at particular locations would be. Allowing the passenger to safely enter and exit is a serious concern and poses the most danger in terms of safety to the passenger.

Where a vehicle stops may or may not be predesignated as such in detailed map information used by the computing devices to control the vehicle. In any event, each drivable area of the map may be identified with its particular identifying parking or stopping characteristics. At least some areas, such as "Keep Clear" or "Don't Block the Box" areas, speed bumps, or railroad tracks are not appropriate for allowing a passenger to enter or exit the vehicle and thus may be "off limits" for stopping to pick up or drop off a passenger. Other areas may be associated with particular time limits or threshold amounts of time either directly in the map information or indirectly by being flagged as a particular type that is associated with a particular time limit.

Before determining where the vehicle may stop, the computing devices first estimate how long the vehicle will need to stop to allow a passenger to enter or exit. The estimate of how long the vehicle is required to stop may depend upon whether the vehicle is picking up a passenger or dropping off a passenger. Additional factors may also be used to calculate how long a vehicle will need to be stopped. This may include information provided by the passenger to an application such as the age, history, number of passengers, number of bags, and/or whether the passenger needs to install a child safety seat (a car seat) in the vehicle before the vehicle can begin moving, etc. Other factors may be related to the pick up or drop off location.

An estimated time to stop may thus involve a baseline or minimum amount of time. As noted above, this minimum amount of time may differ depending upon whether the vehicle is picking up a passenger or dropping off a passenger. For each additional factor, additional time may be added to the estimate based on the type of factor.

The estimate is then used to determine an appropriate place to stop the vehicle and allow a passenger to enter or exit. For instance, the vehicle's computing devices may identify a list of possible places to stop within some distance of the passenger (once identified) and/or the pickup location, or in the case of a drop off, the drop off location.

For each possible place, a corresponding threshold amount of time is identified from the map information. The threshold amount of time is then compared to the estimated time to identify which if any of places of the list of possible places are appropriate for stopping the vehicle. If only one appropriate location is included in the list, the computing devices may then maneuver the vehicle to stop in this best place.

If there is more than one appropriate location, the computing devices may conduct a cost analysis for stopping at each places of the list of possible places. This cost analysis may include establishing a cost for stopping at each of the places of the list of possible places based on a plurality of factors. The cost assessments for each place in the list of possible places may then be used to identifying a best place to stop the vehicle. The computing devices may then maneuver the vehicle to stop in this best place.

The features described above, may allow computing devices of an autonomous vehicle to make better and safer determinations of where to stop the vehicle in order to pick up or drop off passengers. This, in turn, may allow for better and safer determinations for the passengers while also not impeding inconveniencing other traffic.

### EXAMPLE SYSTEMS

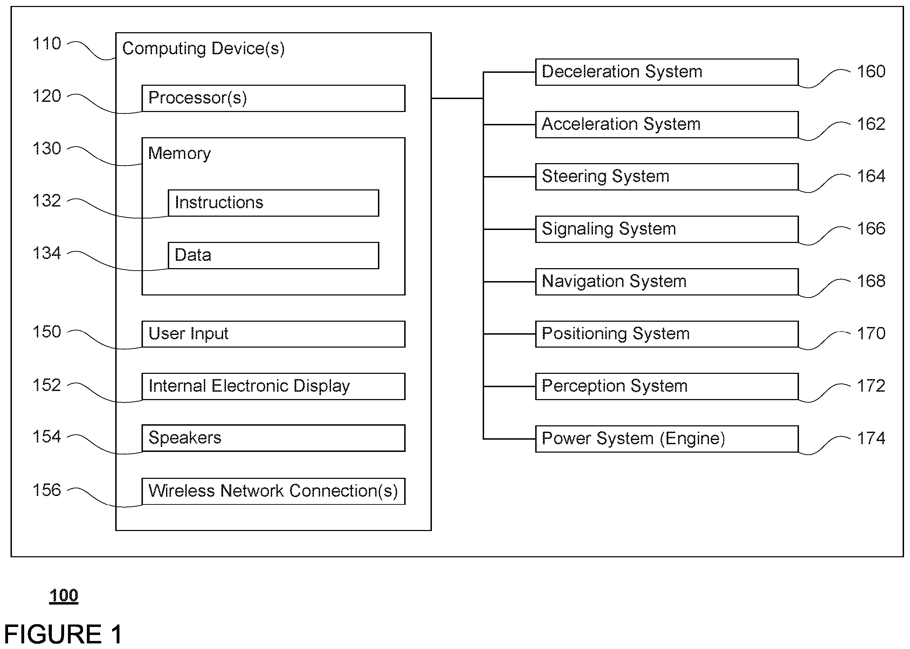

As shown in FIGURE 1, a vehicle 100 in accordance with one aspect of the disclosure includes various components. While certain aspects of the disclosure are particularly useful in connection with specific types of vehicles, the vehicle may be any type of vehicle including, but not limited to, cars, trucks, motorcycles, busses, recreational vehicles, etc. The vehicle may have one or more computing devices, such as computing device 110 containing one or more processors 120, memory 130 and other components typically present in general purpose computing devices.

The memory 130 stores information accessible by the one or more processors 120, including instructions 132 and data 134 that may be executed or otherwise used by the processor 120. The memory 130 may be of any type capable of storing information accessible by the processor, including a computing device-readable medium, or other medium that stores data that may be read with the aid of an electronic device, such as a hard-drive, memory card, ROM, RAM, DVD or other optical disks, as well as other write-capable and read-only memories. Systems and methods may include different combinations of the foregoing, whereby different portions of the instructions and data are stored on different types of media.

The instructions 132 may be any set of instructions to be executed directly (such as machine code) or indirectly (such as scripts) by the processor. For example, the instructions may be stored as computing device code on the computing device-readable medium. In that regard, the terms "instructions" and "programs" may be used interchangeably herein. The instructions may be stored in object code format for direct processing by the processor, or in any other computing device language including scripts or collections of independent source code modules that are interpreted on demand or compiled in advance. Functions, methods and routines of the instructions are explained in more detail below.

The data 134 may be retrieved, stored or modified by processor 120 in accordance with the instructions 132. As an example, data 134 of memory 130 may store predefined scenarios. A given scenario may identify a set of scenario requirements including a type of object, a range of locations of the object relative to the vehicle, as well as other factors such as whether the autonomous vehicle is able to maneuver around the object, whether the object is using a turn signal, the condition of a traffic light relevant to the current location of the object, whether the object is approaching a stop sign, etc. The requirements may include discrete values, such as "right turn signal is on" or "in a right turn only lane", or ranges of values such as "having an heading that is oriented at an angle that is 30 to 60 degrees offset from a current path of vehicle 100." In some examples, the predetermined scenarios may include similar information for multiple objects.

The one or more processor 120 may be any conventional processors, such as commercially available CPUs. Alternatively, the one or more processors may be a dedicated device such as an ASIC or other hardware-based processor. Although FIGURE 1 functionally illustrates the processor, memory, and other elements of computing device 110 as being within the same block, it will be understood by those of ordinary skill in the art that the processor, computing device, or memory may actually include multiple processors, computing devices, or memories that may or may not be stored within the same physical housing. As an example, internal electronic display 152 may be controlled by a dedicated computing device having its own processor or central processing unit (CPU), memory, etc. which may interface with the computing device 110 via a high-bandwidth or other network connection. In some examples, this computing device may be a user interface computing device which can communicate with a user's client device. Similarly, the memory may be a hard drive or other storage media located in a housing different from that of computing device 110. Accordingly, references to a processor or computing device will be understood to include references to a collection of processors or computing devices or memories that may or may not operate in parallel.

Computing device 110 may all of the components normally used in connection with a computing device such as the processor and memory described above as well as a user input 150 (e.g., a mouse, keyboard, touch screen and/or microphone) and various electronic displays (e.g., a monitor having a screen or any other electrical device that is operable to display information). In this example, the vehicle includes an internal electronic display 152 as well as one or more speakers 154 to provide information or audio visual experiences. In this regard, internal electronic display 152 may be located within a cabin of vehicle 100 and may be used by computing device 110 to provide information to passengers within the vehicle 100. In addition to internal speakers, the one or more speakers 154 may include external speakers that are arranged at various locations on the vehicle in order to provide audible notifications to objects external to the vehicle 100.

In one example, computing device 110 may be an autonomous driving computing system incorporated into vehicle 100. The autonomous driving computing system may capable of communicating with various components of the vehicle. For example, returning to FIGURE 1, computing device 110 may be in communication with various systems of vehicle 100, such as deceleration system 160 (for controlling braking of the vehicle), acceleration system 162 (for controlling acceleration of the vehicle), steering system 164 (for controlling the orientation of the wheels and direction of the vehicle), signaling system 166 (for controlling turn signals), navigation system 168 (for navigating the vehicle to a location or around objects), positioning system 170 (for determining the position of the vehicle), perception system 172 (for detecting objects in the vehicle's environment), and power system 174 (for example, a battery and/or gas or diesel powered engine) in order to control the movement, speed, etc. of vehicle 100 in accordance with the instructions 132 of memory 130 in an autonomous driving mode which does not require or need continuous or periodic input from a passenger of the vehicle. Again, although these systems are shown as external to computing device 110, in actuality, these systems may also be incorporated into computing device 110, again as an autonomous driving computing system for controlling vehicle 100.

The computing device 110 may control the direction and speed of the vehicle by controlling various components. By way of example, computing device 110 may navigate the vehicle to a destination location completely autonomously using data from the map information and navigation system 168. Computing devices 110 may use the positioning system 170 to determine the vehicle's location and perception system 172 to detect and respond to objects when needed to reach the location safely. In order to do so, computing devices 110 may cause the vehicle to accelerate (e.g., by increasing fuel or other energy provided to the engine by acceleration system 162), decelerate (e.g., by decreasing the fuel supplied to the engine, changing gears, and/or by applying brakes by deceleration system 160), change direction (e.g., by turning the front or rear wheels of vehicle 100 by steering system 164), and signal such changes (e.g., by lighting turn signals of signaling system 166). Thus, the acceleration system 162 and deceleration system 160 may be a part of a drivetrain that includes various components between an engine of the vehicle and the wheels of the vehicle. Again, by controlling these systems, computing devices 110 may also control the drivetrain of the vehicle in order to maneuver the vehicle autonomously.

As an example, computing device 110 may interact with deceleration system 160 and acceleration system 162 in order to control the speed of the vehicle. Similarly, steering system 164 may be used by computing device 110 in order to control the direction of vehicle 100. For example, if vehicle 100 configured for use on a road, such as a car or truck, the steering system may include components to control the angle of wheels to turn the vehicle. Signaling system 166 may be used by computing device 110 in order to signal the vehicle's intent to other drivers or vehicles, for example, by lighting turn signals or brake lights when needed.

Navigation system 168 may be used by computing device 110 in order to determine and follow a route to a location. In this regard, the navigation system 168 and/or data 134 may store map information, e.g., highly detailed maps that computing devices 110 can use to navigate or control the vehicle. As an example, these maps may identify the shape and elevation of roadways, lane markers, intersections, crosswalks, speed limits, traffic signal lights, buildings, signs, real time or historical traffic information, vegetation, or other such objects and information. The lane markers may include features such as solid or broken double or single lane lines, solid or broken lane lines, reflectors, etc. A given lane may be associated with left and right lane lines or other lane markers that define the boundary of the lane. Thus, most lanes may be bounded by a left edge of one lane line and a right edge of another lane line. As noted above, the map information may store known traffic or congestion information and/or and transit schedules (train, bus, etc.) from a particular pickup location at similar times in the past. This information may even be updated in real time by information received by the computing devices 110.

The perception system 172 also includes one or more components for detecting objects external to the vehicle such as other vehicles, obstacles in the roadway, traffic signals, signs, trees, etc. For example, the perception system 172 may include one or more LIDAR sensors, sonar devices, radar units, cameras and/or any other detection devices that record data which may be processed by computing devices 110. The sensors of the perception system may detect objects and their characteristics such as location, orientation, size, shape, type (for instance, vehicle, pedestrian, bicyclist, etc.), heading, and speed of movement, etc. The raw data from the sensors and/or the aforementioned characteristics can be quantified or arranged into a descriptive function, vector, and or bounding box and sent for further processing to the computing devices 110 periodically and continuously as it is generated by the perception system 172. As discussed in further detail below, computing devices 110 may use the positioning system 170 to determine the vehicle's location and perception system 172 to detect and respond to objects when needed to reach the location safely.

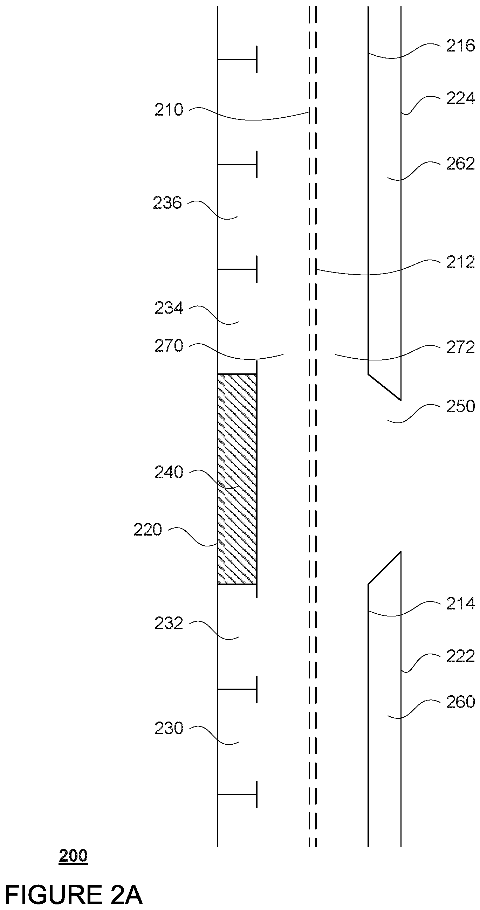

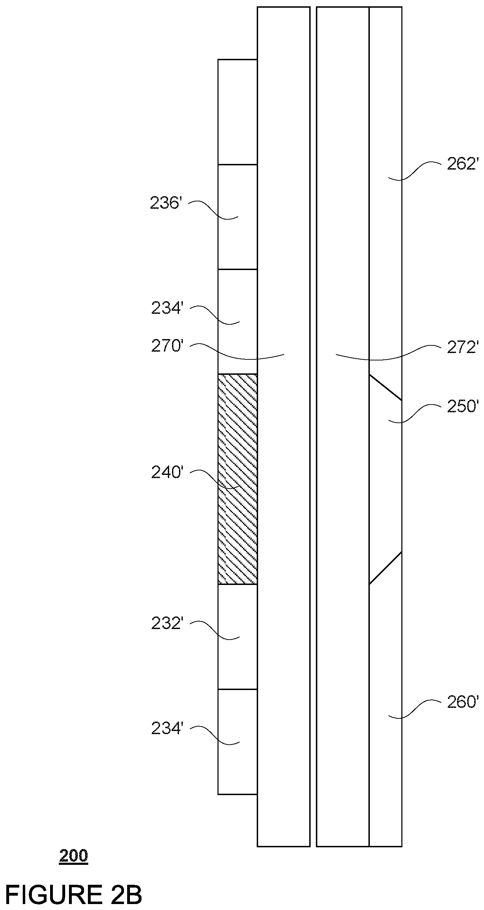

FIGURES 2A and 2B are an example of map information 200 for a small section of roadway. In this example, the map information 200 includes information identifying the shape, location, and other characteristics of road features of the section of roadway such as lane lines 210, 212, 214, 216, curbs 220, 222, 224, parking spots 230, 232, 234, 236, no parking zone 240, driveway 250, shoulder areas 260, 262 defined by line lines 214, 216 and curbs 222, 224, and lanes 270, 272.

In addition to the road features, the map information may identify various stopping regions and associated types. Stopping regions may include areas where a vehicle can drive with specific parking or stopping characteristics such as a parking spot, a shoulder, adjacent to a driveway or entry/exit to a parking lot, a lane of traffic, a no parking zone, adjacent a fire hydrant, a posted "Keep Clear" or "Don't Block the Box" area, speed bump, railroad tracks, etc. Each stopping region may be defined in the map information as a polygon having three or more edges or sides with an associated type. For instance, as shown in FIGURE 2B, the polygons of regions 230', 232', 234', 236', 240', 250', 260', 262', 270', and 272' correspond to two or three-dimensional areas for each of the features of parking spots 230, 232, 234, 236, no parking zone 240, driveway 250, shoulders 260, 262, and lanes 270, 272 of FIGURE 2A, respectively.

Each of these stopping regions may be associated with particular time limits either directly in the map information or indirectly by being flagged as a particular type that is associated with a particular time limit. These time limits may correspond to an acceptable amount of time for a vehicle to be stopped in the region. These time limits may thus correspond to lawful and/or socially acceptable amounts of time for stopping in given locations. As an example, for a designated parking spot, the time limit may correspond to the rules for that parking spot, such as no parking between 2 am and 6 am, 1 or 2 hour parking, 15 minute parking, etc. Table 1 below represents example time limits for the regions of FIGURE 2B and should not be considered exclusive limits or otherwise limiting of such time limits.

**TABLE 1**

| **Region** | **Time Limit** | **Region Type** |
|---|---|---|
| 230' | 15 Minutes | Parking Spot |
| 232' | 15 Minutes | Parking Spot |
| 234' | 15 Minutes | Parking Spot |
| 236' | 15 Minutes | Parking Spot |
| 240' | 1 Minute | No Parking Zone |
| 250' | 15 Seconds | Driveway |
| 260' | 1 Minute | Shoulder |
| 262' | 1 Minute | Shoulder |
| 270' | 10 Seconds | Lane |
| 272' | 10 Seconds | Lane |

According to the invention, for each place of the set of possible places a corresponding threshold amount of time (time limit) is determined such that the autonomous vehicle can stop without substantially impeding other traffic, wherein the corresponding threshold amount of time is based on current traffic conditions. In other words, current traffic conditions may shorten and/or lengthen these time limits. For example, stopping in lane 270' may be appropriate for longer than the time limit of 10 seconds as long as no other object such as another vehicles is impeded. The time limit of 10 seconds may begin once another vehicle, which could be impeded (i.e. because it is approaching vehicle 100 from behind), is detected by the perception system.

Of course, at least certain of these stopping regions, such as "Keep Clear" or "Don't Block the Box" areas, intersections, crosswalks, speed bumps, or railroad tracks are not appropriate for allowing a passenger to enter or exit the vehicle and thus may be "off limits" stopping regions where the vehicle should never stop to allow a passenger to enter or exit the vehicle. In such examples, the time limit may be set to zero seconds.

Although the detailed map information is depicted herein as an image-based map, the map information need not be entirely image based (for example, raster). For example, the detailed map information may include one or more roadgraphs or graph networks of information such as roads, lanes, intersections, and the connections between these features. Each feature may be stored as graph data and may be associated with information such as a geographic location and whether or not it is linked to other related features, for example, a stop sign may be linked to a road and an intersection, etc. In some examples, the associated data may include grid-based indices of a roadgraph to allow for efficient lookup of certain roadgraph features.

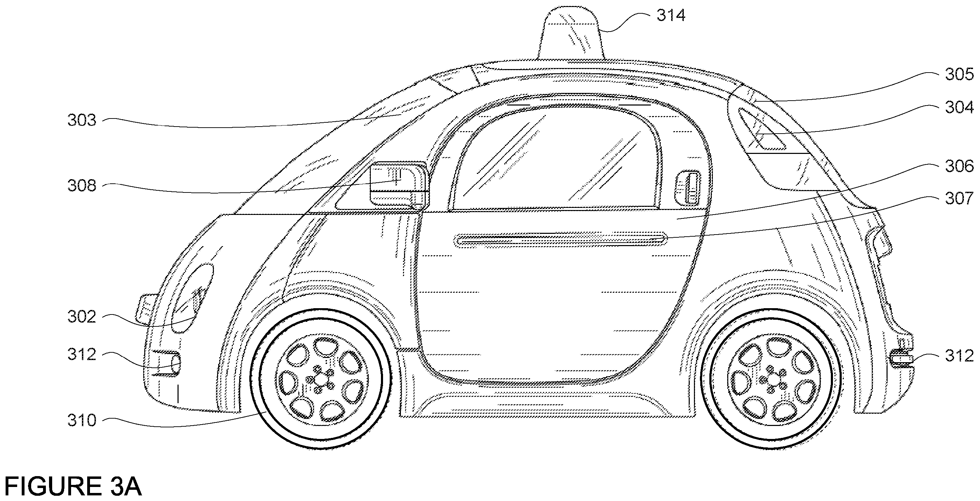

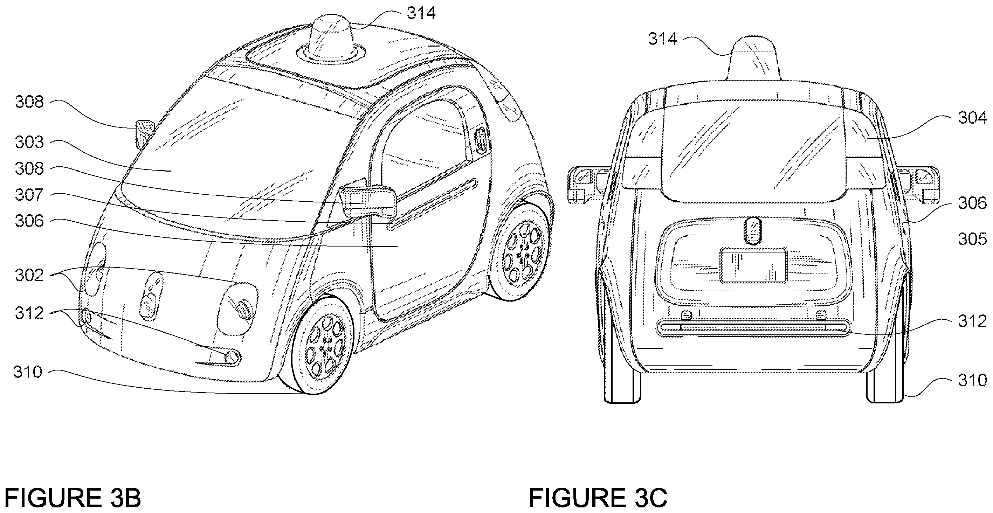

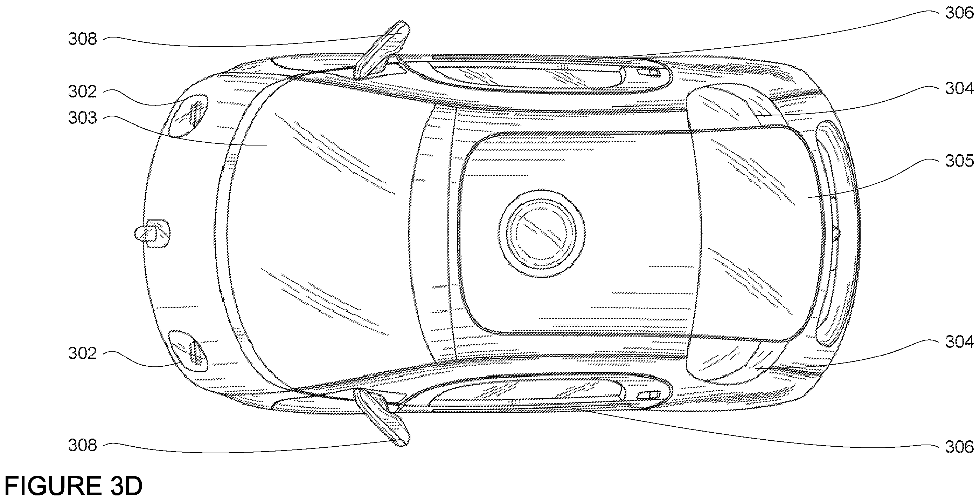

FIGURES 3A-3D are examples of external views of vehicle 100. As can be seen, vehicle 100 includes many features of a typical vehicle such as headlights 302, windshield 303, taillights/turn signal lights 304, rear windshield 305, doors 306, side view mirrors 308, tires and wheels 310, and turn signal/parking lights 312. Headlights 302, taillights/turn signal lights 304, and turn signal/parking lights 312 may be associated the signaling system 166. Light bar 307 may also be associated with the signaling system 166. Housing 314 may house one or more sensors, such as LIDAR sensors, sonar devices, radar units, cameras, etc. of the perception system 172, though such sensors may also be incorporated into other areas of the vehicle as well.

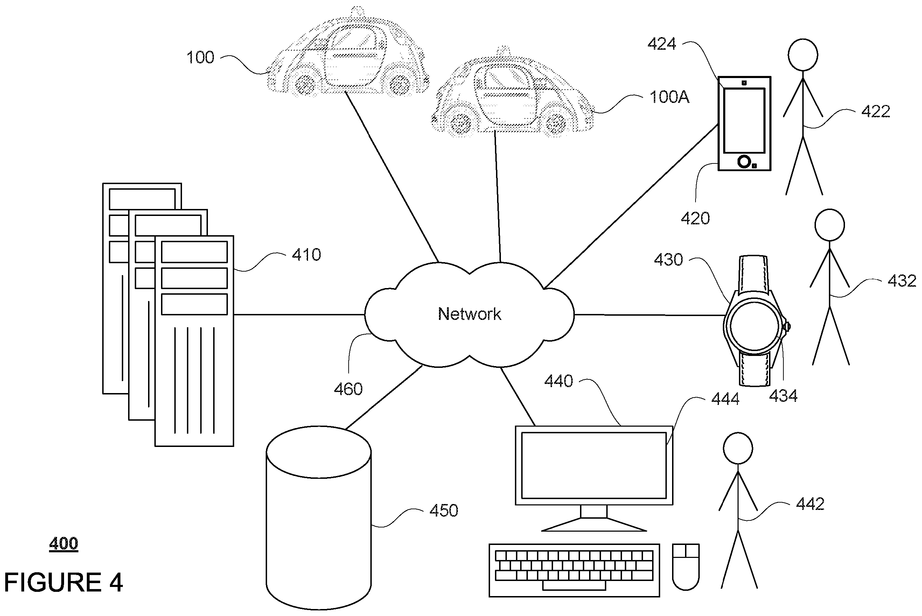

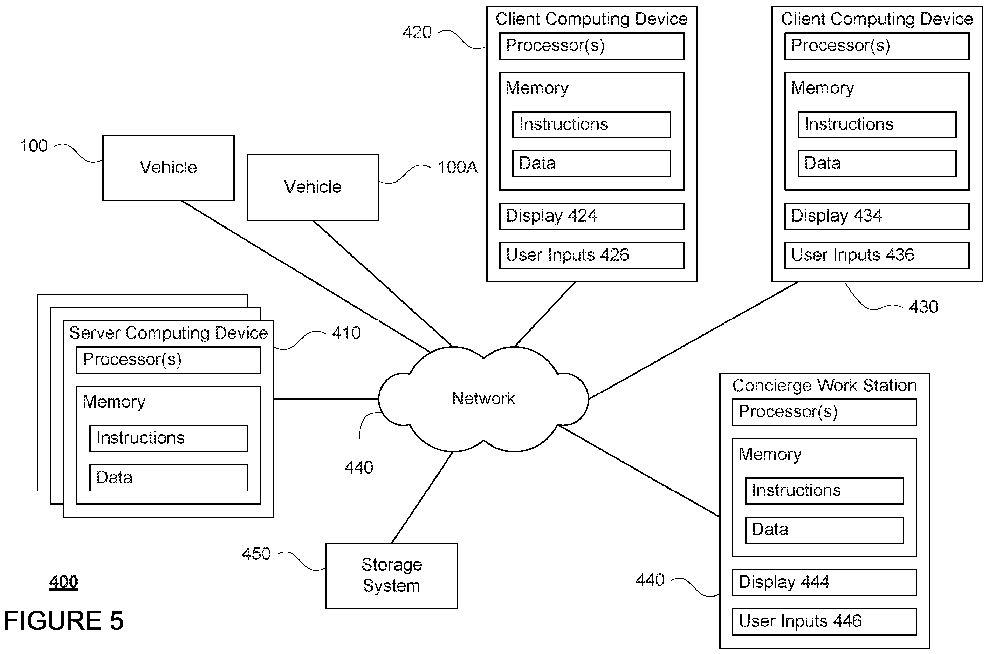

The one or more computing devices 110 of vehicle 100 may also receive or transfer information to and from other computing devices, for instance using wireless network connections 156. The wireless network connections may include, for instance, BLUETOOTH (R), Bluetooth LE, LTE, cellular, near field communications, etc. and various combinations of the foregoing. FIGURES 4 and 5 are pictorial and functional diagrams, respectively, of an example system 400 that includes a plurality of computing devices 410, 420, 430, 440 and a storage system 450 connected via a network 460. System 400 also includes vehicle 100, and vehicle 100A which may be configured similarly to vehicle 100. Although only a few vehicles and computing devices are depicted for simplicity, a typical system may include significantly more.

As shown in FIGURE 4, each of computing devices 410, 420, 430, 440 may include one or more processors, memory, data and instructions. Such processors, memories, data and instructions may be configured similarly to one or more processors 120, memory 130, data 134, and instructions 132 of computing device 110.

The network 460, and intervening nodes, may include various configurations and protocols including short range communication protocols such as BLUETOOTH (R), Bluetooth LE, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any device capable of transmitting data to and from other computing devices, such as modems and wireless interfaces.

In one example, one or more computing devices 110 may include a server having a plurality of computing devices, e.g., a load balanced server farm, that exchange information with different nodes of a network for the purpose of receiving, processing and transmitting the data to and from other computing devices. For instance, one or more computing devices 410 may include one or more server computing devices that are capable of communicating with one or more computing devices 110 of vehicle 100 or a similar computing device of vehicle 100A as well as client computing devices 420, 430, 440 via the network 460. For example, vehicles 100 and 100A may be a part of a fleet of vehicles that can be dispatched by server computing devices to various locations. In this regard, the vehicles of the fleet may periodically send the server computing devices location information provided by the vehicle's respective positioning systems and the one or more server computing devices may track the locations of the vehicles.

In addition, server computing devices 410 may use network 460 to transmit and present information to a user, such as user 422, 432, 442 on a display, such as displays 424, 434, 444 of computing devices 420, 430, 440. In this regard, computing devices 420, 430, 440 may be considered client computing devices.

As shown in FIGURE 5, each client computing device 420, 430, 440 may be a personal computing device intended for use by a user 422, 432, 442, and have all of the components normally used in connection with a personal computing device including a one or more processors (e.g., a central processing unit (CPU)), memory (e.g., RAM and internal hard drives) storing data and instructions, a display such as displays 424, 434, 444 (e.g., a monitor having a screen, a touch-screen, a projector, a television, or other device that is operable to display information), and user input devices 426, 436, 446 (e.g., a mouse, keyboard, touchscreen or microphone). The client computing devices may also include a camera for recording video streams, speakers, a network interface device, and all of the components used for connecting these elements to one another.

Although the client computing devices 420, 430, and 440 may each comprise a full-sized personal computing device, they may alternatively comprise mobile computing devices capable of wirelessly exchanging data with a server over a network such as the Internet. By way of example only, client computing device 420 may be a mobile phone or a device such as a wireless-enabled PDA, a tablet PC, a wearable computing device or system, or a netbook that is capable of obtaining information via the Internet or other networks. In another example, client computing device 430 may be a wearable computing system, shown as a wrist watch in FIGURE 4. As an example the user may input information using a small keyboard, a keypad, microphone, using visual signals with a camera, or a touch screen.

In some examples, client computing device 440 may be concierge work station used by an administrator to provide concierge services to users such as users 422 and 432. For example, a concierge 442 may use the concierge work station 440 to communicate via a telephone call or audio connection with users through their respective client computing devices or vehicles 100 or 100A in order to ensure the safe operation of vehicles 100 and 100A and the safety of the users as described in further detail below. Although only a single concierge work station 440 is shown in FIGURES 4 and 5, any number of such work stations may be included in a typical system.

Storage system 450 may store various types of information as described in more detail below. This information may be retrieved or otherwise accessed by a server computing device, such as one or more server computing devices 410, in order to perform some or all of the features described herein. For example, the information may include user account information such as credentials (e.g., a user name and password as in the case of a traditional single-factor authentication as well as other types of credentials typically used in multi-factor authentications such as random identifiers, biometrics, etc.) that can be used to identify a user to the one or more server computing devices. The user account information may also include personal information such as the user's name, contact information, identifying information of the user's client computing device (or devices if multiple devices are used with the same user account), as well as age information, health information, and user history information about how long it has taken the user to enter or exit vehicles in the past as discussed below.

The storage system 450 may also store routing data for generating and evaluating routes between locations. For example, the routing information may be used to estimate how long it would take a vehicle at a first location to reach a second location. In this regard, the routing information may include map information, not necessarily as particular as the detailed map information described above, but including roads, as well as information about those road such as direction (one way, two way, etc.), orientation (North, South, etc.), speed limits, as well as traffic information identifying expected traffic conditions, etc.

The storage system 450 may also store information which can be provided to client computing devices for display to a user. For instance, the storage system 450 may store predetermined distance information for determining an area at which a vehicle is likely to stop for a given pickup or destination location. The storage system 450 may also store graphics, icons, and other items which may be displayed to a user as discussed below.

As with memory 130, storage system 250 can be of any type of computerized storage capable of storing information accessible by the server computing devices 410, such as a hard-drive, memory card, ROM, RAM, DVD, CD-ROM, write-capable, and read-only memories. In addition, storage system 450 may include a distributed storage system where data is stored on a plurality of different storage devices which may be physically located at the same or different geographic locations. Storage system 450 may be connected to the computing devices via the network 460 as shown in FIGURE 4 and/or may be directly connected to or incorporated into any of the computing devices 110, 410, 420, 430, 440, etc.

### EXAMPLE METHODS

In addition to the operations described above and illustrated in the figures, various operations will now be described. It should be understood that the following operations do not have to be performed in the precise order described below. Rather, various steps can be handled in a different order or simultaneously, and steps may also be added or omitted.

In one aspect, a user may download an application for requesting a vehicle to a client computing device. For example, users 422 and 432 may download the application via a link in an email, directly from a website, or an application store to client computing devices 420 and 430. For example, client computing device may transmit a request for the application over the network, for example, to one or more server computing devices 410, and in response, receive the application. The application may be installed locally at the client computing device.

The user may then use his or her client computing device to access the application and request a vehicle. As an example, a user such as user 432 may use client computing device 430 to send a request to one or more server computing devices 410 for a vehicle. As part of this, the user may identify a pickup location, a destination location, and, in some cases, one or more intermediate stopping locations anywhere within a service area where a vehicle can stop.

These pickup and destination locations may be predefined (e.g., specific areas of a parking lot, etc.) or may simply be any location within a service area of the vehicles. As an example, a pickup location can be defaulted to the current location of the user's client computing device, or can be input by the user at the user's client device. For instance, the user may enter an address or other location information or select a location on a map to select a pickup location. Once the user has selected one or more of a pickup and/or destination locations, the client computing device 420 may send the location or locations to one or more server computing devices of the centralized dispatching system. In response, one or more server computing devices, such as server computing device 410, may select a vehicle, such as vehicle 100, for instance based on availability and proximity to the user. The server computing device 410 may then assign the user as the passenger for the vehicle 100, dispatch the selected vehicle (here vehicle 100) to pick up to the assigned passenger. This may include by providing the vehicle's computing devices 110 with the pickup and/or destination locations specified by the assigned passenger as well as information that can be used by the computing devices 110 of vehicle 100 to authenticate the client computing device, such as client computing device 430.

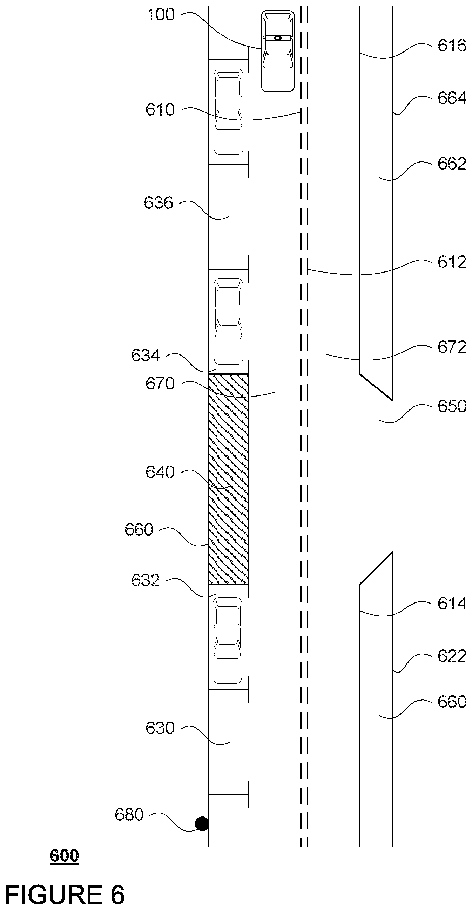

Thereafter, the computing devices 110 may maneuver vehicle 100 towards the pickup location and, after picking up the passenger, towards the destination location. FIGURE 6 represents a small section of roadway corresponding to map information 200. In this regard, lane lines 610, 612, 614, 616 correspond to lane lines 210, 212, 214, 216, curbs 620, 622, 624, parking spots 630, 632, 634, 636 correspond to parking spots 230, 232, 234, 236, no parking zone 640 corresponds to no parking zone 240, driveway 650 corresponds to driveway 250, shoulder areas 660, 662 correspond to shoulder areas 260, 262, and lanes 670, 672 correspond to lanes 270, 272. In this example, vehicle 100 is in lane 670 and is approaching a location 680 corresponding to either a pickup or drop off location for a passenger.

Once the vehicle is within a predetermined distance of a pickup or drop off location, such as 50 meters or more or less, the computing devices 110 begin to look for a place to stop and allow a passenger to enter or exit the vehicle. In order to do this, the vehicle's computing devices first estimate a time corresponding to how long the passenger will need to enter or exit the vehicle. This may thus correspond to how long the vehicle will need to be stopped to wait for the passenger to enter or exit (or in the case of entering a vehicle for a pickup, for the passenger to physically arrive at and/or reach the vehicle).

An estimated time to stop may include a baseline or minimum amount of time. As noted above, this minimum amount of time may differ depending upon whether the vehicle is picking up a passenger or dropping off a passenger. For instance, it may take more time for a passenger to open a door of the vehicle, enter the vehicle, sit down, safely connect a seat belt, close the door, and initiate a self-driving mode of the vehicle (for instance, by hitting a button) than to disconnect a seatbelt, open the door, exit the vehicle and close the door. As an example, it may be expected to take 10 seconds to enter a vehicle but only 5 seconds to exit a vehicle. Thus a baseline for a pickup may be 10 seconds while a baseline for a drop off may only be 5 seconds.

The computing devices 110 may then identify additional time factors. For each additional time factor, a small amount of additional time may be added to the minimum amount of time based on the type of factor. This may include information provided by the passenger to an application such as the age information or health information (i.e. whether the passenger is infirm), which may indicate how fast or slowly a passenger would be expected to move. The passenger's own history with the service, such as how long it has taken him or her to reach and enter vehicle(s) or to exit vehicle(s) in the past or how late the passenger is typically, may also be considered. The factors may also include information provided by the user for a particular trip such as the total number of passengers, number of packages such as boxes or bags, whether there are any bags that need to be placed in a trunk or other cargo compartment of the vehicle, ages or health of any other passengers, or whether the passenger needs to install a child safety seat (a car seat) in the vehicle before the vehicle can begin moving, etc. In this regard, the total time to stop may be a sum of the times of each additional factor identified. For instance, 5 seconds may be added for each additional passenger, another 5 seconds for each elderly or infirm passenger, 3 seconds for each bag, and 3 minutes for installation of each child safety seat.

Other factors may related to the pickup location may also be used to determine the estimated time. For instance, in order to determine an accurate estimated time to stop, additional time may be added based upon the distance between a possible place and the pickup location. This additional time may be determine based on how long a person would be expected to cover the distance waking at an average walking speed.

In addition or alternatively, known traffic or congestion information from a particular pickup location at similar times in the past may be used as a factor. As an example, a particular neighborhood may be busy at particular times during the week when school lets out, or a train station may be busy for only a few minutes every hour depending upon the train schedule. During these times, additional time may be added, such as 10 seconds or more or less, to the estimated time based on the expected congestion. This additional time may therefore take into account additional time needed for a passenger to reach the vehicle due to crowds of people or vehicles. For instance, this may be especially relevant at a transit location such as a train station or bus stop which may only be busy at specific times related to the schedule of the transit location. Additional time could be added if a train or bus is running late. As noted above, this congestion and transit schedule (train, bus, etc.) information may be stored in the map information and updated as new information is received by the computing devices 110.

In addition or alternatively, this congestion and transit schedule information may be used to adjust the corresponding threshold amount of time or type that is associated with a threshold amount of time for any of the possible places. For instance, returning to the example of a transit location, the corresponding threshold amount of time for one or more different types of possible places may be decreased. In other words, when it is likely to take longer for the passenger to enter or exit the vehicle due to congestion (by vehicles or people), stricter thresholds may be used in order to reduce the likelihood of a vehicle stopping in a less desirable location.

The estimated time is then used to determine an appropriate place to stop the vehicle and allow a passenger to enter or exit. For instance, the vehicle's computing devices may identify a list of possible places to stop within some distance of the passenger (once identified and/or the passenger's client devices is authenticated) and/or the pickup location. The vehicle's computing devices may also limit this list to available places (i.e. parking spots that are open, shoulders that are clear, etc.). Returning to FIGURE 6, assuming that the vehicle 100 is within the predetermined distance of the location 680 and given that vehicle 100 is in lane 670, the computing devices may identify parking spots 630, and 636 as well as no parking zone 640 as possible places to stop. Parking spots 632 and 634 may be excluded from the list due to the fact that these parking spots are currently occupied by other vehicles. In addition shoulder areas 660 and 662 as well as entrance 650 would require that vehicle 100 be traveling in lane 672. In other words, these areas may not be considered "available" places to stop the vehicle.

As noted above, each possible place is associated with a corresponding threshold amount of time or type that is associated with a threshold amount of time. The threshold amount of time is then compared to the estimated time to identify which if any of places of the list of possible places are appropriate for stopping the vehicle. Returning to FIGURE 2B, parking spots 630, 636 and no parking zone 640 correspond to parking spots 230, 236 and no parking zone 240. These map features correspond to regions 230', 236', and 240' each of which have an associated time limit. These time limits are then compared to the estimated time to determine which if any of the possible places to stop would be appropriate. If the estimated time is greater than a time limit for a given possible place to stop, this given possible place to stop would not be considered an appropriate place to stop the vehicle. In this regard, the list is filtered to remove inappropriate places. For instance, if the estimated time is 2 minutes for the vehicle to stop at the location 680, the no parking zone 640, which has an associated time limit via region 240' of 1 minute, may not be an appropriate location for the vehicle to stop. In this regard, no parking region 640 may be filtered or removed from the list of possible places.

If after the filtering and/or removing only one appropriate location is included in the list, the computing devices 110 may then maneuver the vehicle to stop in this best place. If there is more than one appropriate location, the computing devices 110 may conduct a cost analysis for stopping at each places of the list of possible places. This cost analysis may include establishing a cost value for stopping at each of the places of the list of possible places based on a plurality of factors and summing the cost values to determine a total cost. As an example, the plurality of factors may include (for a pickup) how far the place appears to be from the passenger's GPS coordinates (too far may have a higher cost value), how far the place is from the pickup or drop off location (too far may have a higher cost value), the type of the place (fire hydrant may have a higher cost than parking area, stopping in a lane may have a cost related to the social burden or discomfort to the passenger), and how close each estimated time is to the corresponding threshold amount of time (too close may have a higher cost value). A cost value for moving the vehicle "around the block" and attempting to find a "better" place to stop may also be determined and included in the total cost assessment. For instance, if the time it takes to loop back around is less than the time the computing devices 110 would expect the vehicle to be sitting and waiting for the passenger to come out and meet the vehicle (such as when the vehicle has arrived early), the cost of looping back around may be higher than the cost of waiting.

The total cost assessments for each place in the list of possible places may then be used to identifying a best place to stop the vehicle. For instance, assuming high costs are "bad" as in the examples above, the lowest cost place may be identified as the "best" place to stop the vehicle. The computing devices may then maneuver the vehicle to stop in this best place. Returning to the example of FIGURE 6, parking spot 630 may have a lower total cost assessment than parking spot 636 as it is located closer to the location 680. In this regard, the computing devices 110 may maneuver the vehicle 100 to stop in parking spot 630 to allow a passenger to enter (if a pickup) or exit (if a drop off) the vehicle.

In some unlikely instances, the computing devices may not be able to identify any place to stop the vehicle, such as where the estimated amount of time is greater than the corresponding threshold amount of time for all of the possible places and/or there are simply no available places to stop (in other words, stopping in a lane in not safe, appropriate or available). In such instances, the computing devices may attempt to maneuver the vehicle "around the block" or rather, passed the pickup or drop off location and then maneuver the vehicle in order to return back to the pickup or drop off location. In other examples, the time limits may be adjusted, for instance, increased by 10 seconds or more or less. This adjustment may be limited to only certain types of regions, for instance, the time limit for stopping on railroad tracks may never be increased above zero.

At the same time, the passenger's client computing device may be sent a notification that the vehicle is have trouble finding an appropriate spot to stop and wait for the passenger. The notification may then allow the passenger to identify a new location and/or ask the vehicle to go around the block and come back. In other words, the passenger may be given the option to decide how best to address the problem. The passenger may enter his or her preference (and a new location if needed) at the passenger's client computing device which may be sent to the computing devices 110. The computing devices 110 may then control the vehicle according to the passenger's preference.

In addition or alternatively to maneuvering around the block and/or sending a notification, the passenger may be able to use his or her client computing device to indicate that he or she is "currently" ready to be picked up. This may mean that the passenger is ready and waiting, for instance outside of a building and by a curb as opposed to being in a building or still moving towards the pickup location (i.e. walking, on a bus, on a train, etc.). This may be used to revise the estimated time and effectively "re-enable" or "re-list" previously filtered or removed possible places.

The features described herein, may allow computing devices of an autonomous vehicle to make better and safer determinations of where to stop the vehicle in order to pick up or drop off passengers. This, in turn, may allow for better and safer determinations for the passengers while also not impeding or inconveniencing other traffic.

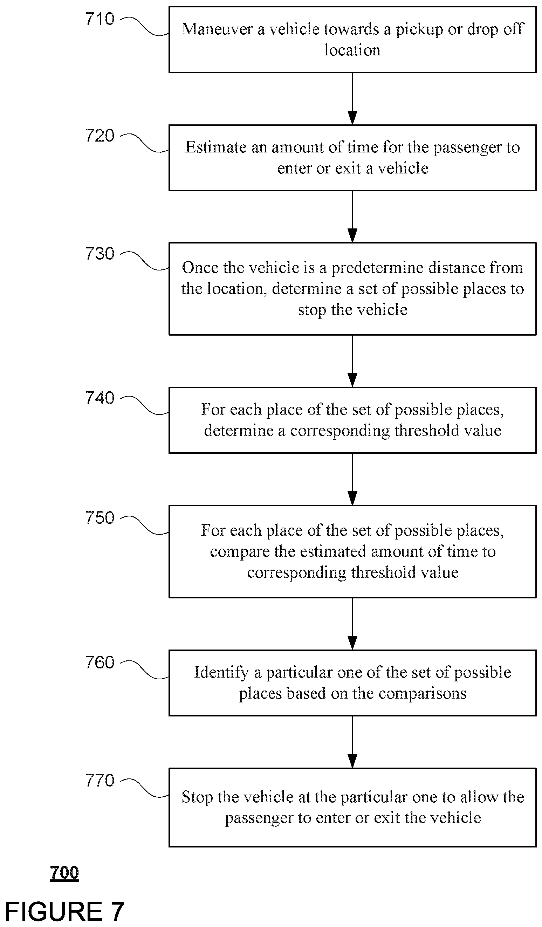

FIGURE 7 is a flow diagram 700 that may be performed by one or more processors such as one or more processors 120 of computing device 110. In this example, at block 710, a vehicle is maneuvered towards a location to pick up or drop off a passenger. At block 720, an amount of time for the passenger to enter or exit a vehicle is estimated. Once the vehicle is a predetermine distance from the location, a set of possible places to stop the vehicle are determined at block 730. For each place of the set of possible places, a corresponding threshold value is determined at block 740. For each place of the set of possible places, the estimated amount of time is compared to the corresponding threshold value at block 750. A particular one of the set of possible places is identified based on the comparisons at block 760, and the vehicle at the particular one to allow the passenger to enter or exit the vehicle at block 770.

Unless otherwise stated, the foregoing alternative examples are not mutually exclusive, but may be implemented in various combinations to achieve unique advantages. The foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples. Further, the same reference numbers in different drawings can identify the same or similar elements.

## Claims

1. A method of stopping an autonomous vehicle to pick up or drop off a passenger at a location, the method comprising:
causing maneuvering (710), by one or more processors, an autonomous vehicle towards the location;
estimating (720), by the one or more processors, an amount of time for the passenger to enter or exit the autonomous vehicle;
once the autonomous vehicle is a predetermined distance from the location, determining (730), by the one or more processors, a set of possible places to stop the autonomous vehicle;
for each place of the set of possible places, determining (740) a corresponding threshold amount of time the autonomous vehicle can stop without substantially impeding other traffic, wherein the corresponding threshold amount of time is based on current traffic conditions;
for each place of the set of possible places, comparing (750), by the one or more processors, the estimated amount of time to the corresponding threshold amount of time;
filtering the set of possible places based on the comparisons to remove places from the set of possible places when the estimated amount of time is greater than the corresponding threshold amount of time;
identifying (760), by the one or more processors, a particular one of the set of possible places based on the comparisons and the filtering; and
causing stopping (770), by the one or more processors, of the autonomous vehicle at the particular one to allow the passenger to enter or exit the autonomous vehicle.

2. The method of claim 1, wherein the estimate is determined based on whether the passenger will be exiting or entering the autonomous vehicle at the location.

3. The method of claim 1 or claim 2, wherein the estimate is determined using a minimum amount of time and adding to that minimum amount of time additional time according to a plurality of factors.

4. The method of claim 3, wherein the plurality of factors includes whether the passenger has any packages.

5. The method of any of claims 3 to 4, wherein the plurality of factors includes whether any packages need to be retrieved from a cargo compartment of the autonomous vehicle.

6. The method of any of claims 3 to 5, wherein the plurality of factors includes whether any packages need to be placed in a cargo compartment of the autonomous vehicle.

7. The method of any of claims 3 to 6, wherein the plurality of factors includes historical information identifying prior amounts of time for the passenger entering or exiting one or more vehicles.

8. The method of any of claims 3 to 7, wherein the plurality of factors includes a number of other passengers who will be entering or exiting the autonomous vehicle with the passenger.

9. The method of any of claims 3 to 8, wherein the plurality of factors includes a whether a child safety seat will be installed.

10. The method of any of claims 3 to 9, wherein the plurality of factors includes historical traffic information.

11. The method of any preceding claim, further comprising:
determining for each place of the filtered set of possible places a cost value, and wherein identifying the particular one is based on the cost values.

12. A computer program comprising machine-readable instructions which, when executed by one or more processors of an autonomous vehicle, cause execution of the method of any of claims 1 to 11.

13. A system for stopping an autonomous vehicle to pick up or drop off a passenger at a location, the system comprising:
one or more processors configured to:
cause maneuvering (710) of an autonomous vehicle towards the location;
estimate (720) an amount of time for the passenger to enter or exit the autonomous vehicle;
once the vehicle is a predetermined distance from the location, determine (730) a set of possible places to stop the autonomous vehicle;
for each place of the set of possible places, determine (740) a corresponding threshold amount of time the autonomous vehicle can stop without substantially impeding other traffic, wherein the corresponding threshold amount of time is based on current traffic conditions;
for each place of the set of possible places, compare (750) the estimated amount of time to the corresponding threshold amount of time;
filter the set of possible places based on the comparisons to remove places from the set of possible places when the estimated amount of time is greater than the corresponding threshold amount of time;
identify (760) a particular one of the set of possible places based on the comparisons and the filtering; and
cause stopping (770) of the autonomous vehicle at the particular one to allow the passenger to enter or exit the autonomous vehicle.

14. The system of claim 13, configured additionally to perform the method of any of claims 2 to 11.

15. The system of claim 13 or claim 14, further comprising the autonomous vehicle.

## Patentansprüche

1. Verfahren zum Anhalten eines autonomen Fahrzeugs, um einen Passagier an einem Ort aufzunehmen oder abzusetzen, wobei das Verfahren Folgendes umfasst:
Veranlassen eines Manövrierens (710), durch einen oder mehrere Prozessoren, eines autonomen Fahrzeugs zu dem Ort hin;
Schätzen (720), durch den einen oder die mehreren Prozessoren, einer Zeitdauer eines Einsteigens in oder Aussteigens aus dem autonomen Fahrzeug durch den Passagier;
Bestimmen (730), durch den einen oder die mehreren Prozessoren, eines Satzes möglicher Plätze, um das autonome Fahrzeug anzuhalten, sobald das autonome Fahrzeug sich in einer vorbestimmte Entfernung von dem Ort befindet;
für jeden Platz des Satzes möglicher Plätze, Bestimmen (740) einer entsprechenden Schwellenzeitdauer, die das autonome Fahrzeug anhalten kann, ohne im Wesentlichen anderen Verkehr zu behindern, wobei die entsprechende Schwellenzeitdauer auf aktuellen Verkehrsbedingungen basiert;
Vergleichen (750), durch den einen oder die mehreren Prozessoren, der geschätzten Zeitdauer mit der entsprechenden Schwellenzeitdauer für jeden Platz des Satzes möglicher Plätze;
Filtern des Satzes möglicher Plätze basierend auf den Vergleichen, um Plätze aus dem Satz möglicher Plätze zu entfernen, wenn die geschätzte Zeitdauer größer als die entsprechende Schwellenzeitdauer ist;
Identifizieren (760), durch den einen oder die mehreren Prozessoren, eines speziellen Platzes aus dem Satz möglicher Plätze basierend auf den Vergleichen und dem Filtern; und
Veranlassen eines Anhaltens (770), durch den einen oder die mehreren Prozessoren, des autonomen Fahrzeugs an dem einen speziellen Platz, um es dem Passagier zu ermöglichen, in das autonome Fahrzeug einzusteigen oder aus diesem auszusteigen.

2. Verfahren nach Anspruch 1, wobei die Schätzung basierend darauf bestimmt wird, ob der Passagier an dem Ort aus dem autonomen Fahrzeug aussteigt oder in dieses einsteigt.

3. Verfahren nach Anspruch 1 oder Anspruch 2, wobei die Schätzung unter Verwendung einer minimalen Zeitdauer und Addieren zu dieser minimalen Zeitdauer von zusätzlicher Zeit gemäß einer Vielzahl von Faktoren bestimmt wird.

4. Verfahren nach Anspruch 3, wobei die Vielzahl von Faktoren enthält, ob der Passagier Gepäck hat.

5. Verfahren nach einem der Ansprüche 3 bis 4, wobei die Vielzahl von Faktoren enthält, ob Gepäck aus einem Laderaum des autonomen Fahrzeugs geholt werden muss.

6. Verfahren nach einem der Ansprüche 3 bis 5, wobei die Vielzahl von Faktoren enthält, ob Gepäck in einem Laderaum des autonomen Fahrzeugs untergebracht werden muss.

7. Verfahren nach einem der Ansprüche 3 bis 6, wobei die Vielzahl von Faktoren Verlaufsinformationen enthält, die frühere Zeitdauern eines Einsteigens in oder Aussteigens aus einem oder mehreren Fahrzeugen durch den Passagier identifizieren.

8. Verfahren nach einem der Ansprüche 3 bis 7, wobei die Vielzahl von Faktoren eine Anzahl anderer Passagiere enthält, die mit dem Passagier in das autonome Fahrzeug einsteigen oder aus diesem aussteigen werden.

9. Verfahren nach einem der Ansprüche 3 bis 8, wobei die Vielzahl von Faktoren enthält, ob ein Kindersicherheitssitz installiert wird.

10. Verfahren nach einem der Ansprüche 3 bis 9, wobei die Vielzahl von Faktoren Verlaufsverkehrsinformationen enthält.

11. Verfahren nach einem vorhergehenden Anspruch, ferner umfassend:
Bestimmen eines Kostenwerts für jeden Platz des gefilterten Satzes möglicher Plätze, und wobei das Identifizieren des speziellen Platzes auf den Kostenwerten basiert.

12. Computerprogramm, maschinenlesbare Anweisungen umfassend, die, wenn sie durch einen oder mehrere Prozessoren eines autonomen Fahrzeugs ausgeführt werden, eine Ausführung des Verfahrens nach einem der Ansprüche 1 bis 11 veranlassen.

13. System zum Anhalten eines autonomen Fahrzeugs, um einen Passagier an einem Ort aufzunehmen oder abzusetzen, wobei das System Folgendes umfasst:
einen oder mehrere Prozessoren, die zu Folgendem konfiguriert sind:
Veranlassen eines Manövrierens (710) eines autonomen Fahrzeugs zu dem Ort hin;
Schätzen (720) einer Zeitdauer eines Einsteigens in oder Aussteigens aus dem autonomen Fahrzeug durch den Passagier;
Bestimmen (730) eines Satzes möglicher Plätze, um das autonome Fahrzeug anzuhalten, sobald das Fahrzeug sich in einer vorbestimmte Entfernung von dem Ort befindet;
für jeden Platz des Satzes möglicher Plätze, Bestimmen (740) einer entsprechenden Schwellenzeitdauer, die das autonome Fahrzeug anhalten kann, ohne im Wesentlichen anderen Verkehr zu behindern, wobei die entsprechende Schwellenzeitdauer auf aktuellen Verkehrsbedingungen basiert;
Vergleichen (750) der geschätzten Zeitdauer mit der entsprechenden Schwellenzeitdauer für jeden Platz des Satzes möglicher Plätze;
Filtern des Satzes möglicher Plätze basierend auf den Vergleichen, um Plätze aus dem Satz möglicher Plätze zu entfernen, wenn die geschätzte Zeitdauer größer als die entsprechende Schwellenzeitdauer ist;
Identifizieren (760) eines speziellen Platzes aus dem Satz möglicher Plätze basierend auf den Vergleichen und dem Filtern; und
Veranlassen eines Anhaltens (770) des autonomen Fahrzeugs an dem einen speziellen Platz, um es dem Passagier zu ermöglichen, in das autonome Fahrzeug einzusteigen oder aus diesem auszusteigen.

14. System nach Anspruch 13, das zusätzlich dazu konfiguriert ist, das Verfahren nach einem der Ansprüche 2 bis 11 durchzuführen.

15. System nach Anspruch 13 oder Anspruch 14, ferner umfassend das autonome Fahrzeug.

## Revendications

1. Procédé d'arrêt d'un véhicule autonome pour aller chercher ou déposer un passager sur un lieu, le procédé comprenant :
l'entraînement d'une manoeuvre (710), par un ou plusieurs processeurs, d'un véhicule autonome vers le lieu ;
l'estimation (720), par le ou les processeurs, d'une quantité de temps pour que le passager entre ou sorte du véhicule autonome ;
une fois que le véhicule autonome est à une distance prédéfinie du lieu, la détermination (730), par le ou les processeurs, d'un ensemble de places possibles pour l'arrêt du véhicule autonome ;
pour chaque place de l'ensemble de places possibles, la détermination (740) d'une quantité de temps seuil correspondante durant laquelle le véhicule autonome peut s'arrêter sans entraver sensiblement le reste de la circulation, la quantité de temps seuil correspondante étant basée sur les conditions de circulation actuelles ;
pour chaque place de l'ensemble de lieux possibles, la comparaison (750), par le ou les processeurs, de la quantité de temps estimée à la quantité de temps seuil correspondante ;
le filtrage de l'ensemble de places possibles sur la base des comparaisons pour supprimer des places de l'ensemble de places possibles lorsque la quantité de temps estimée est supérieure à la quantité de temps seuil correspondante ;
l'identification (760), par le ou les processeurs, d'une place particulière parmi l'ensemble de places possibles sur la base des comparaisons et du filtrage ; et
l'entraînement de l'arrêt (770), par le ou les processeurs, du véhicule autonome au niveau de la place particulière pour permettre au passager d'entrer ou de sortir du véhicule autonome.

2. Procédé de la revendication 1, ladite estimation étant déterminée sur la base que le passager sort ou entre dans le véhicule autonome sur le lieu.

3. Procédé de la revendication 1 ou de la revendication 2, ladite estimation étant déterminée en utilisant une quantité minimale de temps et en ajoutant à cette quantité minimale de temps un temps supplémentaire selon une pluralité de facteurs.

4. Procédé de la revendication 3, ladite pluralité de facteurs comprenant la possession ou non de quelconques colis par le passager.

5. Procédé de l'une quelconque des revendications 3 à 4, ladite pluralité de facteurs comprenant la récupération ou non de quelconques colis à partir d'un compartiment à bagage du véhicule autonome.

6. Procédé de l'une quelconque des revendications 3 à 5, ladite pluralité de facteurs comprenant la nécessité ou non de placer des quelconques colis dans un compartiment à bagage du véhicule autonome.

7. Procédé de l'une quelconque des revendications 3 à 6, ladite pluralité de facteurs comprenant des informations historiques identifiant des quantités de temps antérieures pour le passager entrant ou sortant d'un ou plusieurs véhicules.

8. Procédé de l'une quelconque des revendications 3 à 7, ladite pluralité de facteurs comprenant un nombre d'autres passagers qui entrent ou sortent du véhicule autonome avec le passager.

9. Procédé de l'une quelconque des revendications 3 à 8, ladite pluralité de facteurs comprenant l'installation ou non d'un siège de sécurité pour enfant.

10. Procédé de l'une quelconque des revendications 3 à 9, ladite pluralité de facteurs comprenant des informations de circulation historiques.

11. Procédé d'une quelconque revendication précédente, comprenant en outre :
la détermination pour chaque place de l'ensemble filtré de places possibles d'une valeur de coût, et ladite identification de la place particulière étant basée sur les valeurs de coût.

12. Programme informatique comprenant des instructions lisibles par machine qui, lorsqu'elles sont exécutées par un ou plusieurs processeurs d'un véhicule autonome, entraînent l'exécution du procédé selon l'une quelconque des revendications 1 à 11.

13. Système pour l'arrêt d'un véhicule autonome pour aller chercher ou déposer un passager sur un lieu, le système comprenant :
un ou plusieurs processeurs configurés pour :
entraîner une manoeuvre (710) d'un véhicule autonome vers le lieu ;
estimer (720) une quantité de temps pour que le passager entre ou sorte du véhicule autonome ;
une fois que le véhicule est à une distance prédéfinie du lieu, déterminer (730) un ensemble de places possibles pour l'arrêt du véhicule autonome ;
pour chaque place de l'ensemble de places possibles, déterminer (740) une quantité de temps seuil correspondante durant laquelle le véhicule autonome peut s'arrêter sans entraver sensiblement le reste de la circulation, ladite quantité de temps seuil correspondante étant basée sur les conditions de circulation actuelles ;
pour chaque place de l'ensemble de places possibles, comparer (750) la quantité de temps estimée à la quantité de temps seuil correspondante ;
filtrer l'ensemble de places possibles sur la base des comparaisons pour supprimer des places de l'ensemble de places possibles lorsque la quantité de temps estimée est supérieure à la quantité de temps seuil correspondante ;
identifier (760) une place particulière parmi l'ensemble de places possibles sur la base des comparaisons et du filtrage ; et
entraîner l'arrêt (770) du véhicule autonome au niveau de la place particulière pour permettre au passager d'entrer ou de sortir du véhicule autonome.

14. Système de la revendication 13, configuré également pour réaliser le procédé de l'une quelconque des revendications 2 à 11.

15. Système de la revendication 13 ou de la revendication 14, comprenant en outre le véhicule autonome.
